# EUROPÄISCHE PATENTSCHRIFT

(11) **EP 2 117 887 B1**
(45) Veröffentlichungstag und Bekanntmachung des Hinweises auf die Patenterteilung: **23.02.2011**
(21) Anmeldenummer: 07848042.3
(22) Anmeldetag: 11.12.2007
(51) Int. Cl.: B60R 25/02, E05B 15/00, E05B 63/00, E05C 1/06

(54) **VORRICHTUNG ZUR ANSTEUERUNG EINES SPERRGLIEDES**
DEVICE FOR ACTIVATING A LOCKING ELEMENT
DISPOSITIF D'ASSERVISSEMENT D'UN ORGANE DE BLOCAGE

(30) Priorität: 12.12.2006 DE 102006058759
(43) Veröffentlichungstag der Anmeldung: 18.11.2009
(73) Patentinhaber: Huf Hülsbeck & Fürst GmbH & Co. KG, 42551 Velbert (DE)
(72) Erfinder: TRISCHBERGER, Werner, 85229 Langenpettenbach (DE)
(74) Vertreter: Vogel, Andreas
(86) Internationale Anmeldenummer: PCT/EP2007/063653
(87) Internationale Veröffentlichungsnummer: WO 2008/071677

(56) Entgegenhaltungen:
- EP-A- 1 460 215
- GB-A- 2 249 805
- US-A- 4 703 960

## Beschreibung

Die Erfindung betrifft eine Vorrichtung zur Ansteuerung eines Sperrgliedes eines funktionswesentlichen Bauteils, insbesondere einer Lenksäule oder eines Gangschalthebels eines Kraftfahrzeuges, mit einem Getriebe, das ein Antriebsrad mit einer ersten, ortsfesten Drehachse aufweist und mit dem Sperrglied in mechanischer Wirkverbindung steht, wodurch bei Drehung des Antriebsrades das Sperrglied in eine erste Stellung und in eine zweite Stellung bringbar ist, und das Getriebe während der Drehung des Antriebsrades einen Freilauf und einen Arbeitslauf aufweist, wobei beim Freilauf das Sperrglied unverändert in seiner Position verbleibt und beim Arbeitslauf das Sperrglied linear bewegt wird. Hierbei kann die erste Stellung eine Verriegelungsstellung und die zweite Stellung eine Entriegelungsstellung des Sperrgliedes oder umgekehrt sein.

Für den Fachmann ist die oben genannte Vorrichtung, insbesondere für eine Lenkungsverriegelung für ein Kraftfahrzeug bekannt, bei der ein Sperrglied mittels eines Motors und eines zwischengeschalteten Getriebes zwischen einer Entriegelungsstellung und einer Verriegelungsstellung vor und zurück betätigbar ist. Aus der DE 196 21 326 C1 ist eine derartige Vorrichtung zur Ver- und Entriegelung der Lenksäule eines Kraftfahrzeuges beschrieben. Dabei werden zwei an einer Antriebswelle befestigte Sperrglieder durch entsprechende Aktivierung eines Motors in die Nuten eines an der Lenksäule befestigten Schließringes hinein- bzw. im Falle der Entriegelung aus den Nuten herausgeschwenkt. Einer der Nachteile dieser Lenkungsverriegelung ist, dass ein hoher Steuerungsaufwand des Getriebes für die Bewegung des Sperrgliedes in seine jeweilige Stellung notwendig ist.

Bekannt sind ferner Vorrichtungen der eingangs genannten Art, bei denen besondere Maßnahmen getroffen sind, um sicherzustellen, dass das Sperrglied stets nur genau bis in die Verriegelungsstellung oder in die Entriegelungsstellung und nicht weiter läuft, auch dann nicht, wenn das Getriebe nicht augenblicklich stillsteht, sobald das Sperrglied die Verriegelungsstellung oder die Entriegelungsstellung erreicht hat. In der DE 100 30 688 C1 ist ein derartiges Schloss zum Verriegeln einer Lenksäule eines Kraftfahrzeuges beschrieben mit einem Sperrglied, das zwischen einer Verriegelungsstellung und einer Entriegelungsstellung hin- und herbewegbar ist. Die Bewegung des Sperrgliedes erfolgt mittels eines Getriebes, das ein Steuerglied hin- und herdreht, wodurch eine Axialverschiebung des Sperrgliedes erfolgt. Hierbei weist das Getriebe einen Freilauf und einen Arbeitslauf auf. Das Steuerglied kann nach dem Arbeitslauf noch beliebig in eine Richtung weitergedreht werden, ohne irgendeine Bewegung des Sperrgliedes zu bewirken. Der Motor, der das Getriebe antreibt, muss nicht sofort stillstehen, wenn das Sperrglied die Entriegelungsstellung bzw. die Verriegelungsstellung erreicht hat. Vielmehr kann der Motor ein wenig weiterlaufen und das Steuerglied um einen festgelegten Winkel weiterdrehen, ohne dass sich das Sperrglied bewegt und das Sperrglied die Entriegelungsstellung bzw. die Verriegelungsstellung verlassen würde.

Die EP 1 460 215 A2 offenbart ein zylinderbetätigbares Mehrriegelschloss für eine Tür. Hierbei wird ein Freilauf durch die Verbindung eines Getriebezahnrades und eines weiteren Zahnrades hergestellt, wobei hierzu das Getriebezahnrad mindestens einen Mitnehmer und das weitere Zahnrad Ausnehmungen aufweist.

In der US 4, 703, 960 wird ein Leerlauf dazu verwendet, ein Sperrglied für einen Fensterflügel weiter zu bewegen.

Von Nachteil ist hierbei, dass Insbesondere das Getriebe aus vielen Einzelteilen aufgebaut ist, welches einen entsprechenden Aufwand bei Herstellung und Montage erfordert.

Es ist Aufgabe der vorliegenden Erfindung, eine Vorrichtung zur Ansteuerung eines Sperrgliedes zu schaffen, bei der die genannten Nachteile vermieden werden, insbesondere eine Vorrichtung bereitgestellt wird, die einfach und kompakt gestaltet ist und eine sichere Funktionsweise aufweist.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass das Antriebsrad einen Steuernocken aufweist, der mit einer am Sperrglied angeordneten Führungskontur zusammenwirkt und entlang der Führungskontur bewegbar ist, und ein Sicherungselement am Antriebsrad und ein Gegensicherungselement an der Führungskontur derart zueinander angeordnet sind, dass während des Freilaufes eine Bewegung des Sperrgliedes verhindert wird.

Besonders vorteilhaft Ist, dass ein kompakter Aufbau bei der erfindungsgemäßen Vorrichtung, erzielt wird, wobei gleichzeitig große Hubbewegungen des Sperrgliedes durchführbar sind. Ein weiterer Vorteil ist, dass die erfindungsgemäße Vorrichtung nur aus wenigen Einzelteilen besteht und daher die Herstellung und Montage mit geringem Aufwand möglich ist. Vorteilhafterweise wird das Antriebsrad durch einen Motor, beispielsweise einen Elektromotor, angetrieben. Ausgehend von der ersten Stellung, beispielsweise der Verriegelungsstellung des Sperrgliedes, dreht sich das Antriebsrad um die Drehachse, wobei gleichzeitig der Steuernocken, der zweckmäßigerweise exzentrisch zur Drehachse angeordnet ist, sich mitbewegt. Der Steuernocken bewegt sich entlang der Führungskontur, wobei während der Bewegung des Steuemockens eine leichte Berührung der Führungskontur stattfinden kann. Für einen definierten Drehwinkelbereich des Antriebsrades weist das Getriebe einen Freilauf und einen Arbeitslauf auf. Während des Freilaufes ist das Antriebsrad mit dem Steuernocken stets in Bewegung, wobei gleichzeitig die Führungskontur unverändert in ihrer Position verbleibt. Ab einer definierten

Drehwinkelstellung des Antriebsrades übt der Steuernocken eine gewisse Kraft auf die Führungskontur aus, die anschließend durch die Bewegung des Antriebsrades linear bewegt wird, wodurch das Sperrglied aus seiner ersten Stellung in die zweite Stellung geführt wird. Mit Hilfe der Führungskontur wird eine Zwangsführung des Sperrgliedes bewirkt, die ohne jegliche Hilfsmittel wie beispielsweise Federelemente etc. auskommt. Ist die zweite Stellung des Sperrgliedes erreicht, kann das Getriebe einen weiteren Freilauf aufweisen, bei dem das Antriebsrad sich noch weiterbewegen kann, ohne dass der Steuernocken eine Kraft auf die Führungskontur ausübt. Um das Sperrglied anschließend von der zweiten Stellung in die erste Stellung zurückzubewegen, wird vorteilhafterweise der Motor reversiert, so dass dieser in entgegen gesetzter Drehrichtung das Antriebsrad bewegt. Vorteilhafterweise ist die erfindungsgemäße Vorrichtung derart ausgeführt, dass das Getriebe zwei Freiläufe, zum Beispiel einen Vorlauf und einen Nachlauf aufweist. Während der Bewegung des Sperrgliedes von seiner ersten Stellung in die zweite Stellung kann der Freilauf durch einen ersten Freilauf und durch einen zweiten Freilauf gebildet sein, wobei der erste Freilauf in der ersten Stellung des Sperrgliedes und der zweite Freilauf in der zweiten Stellung des Sperrgliedes erfolgt. Selbstverständlich kann das Getriebe alternativ nur einen einzigen Freilauf aufweisen.

Damit das Sperrglied nicht ungewollt während des Freilaufes aus seiner Stellung gebracht wird, ist eine zusätzliche Sicherheitseinrichtung innerhalb des Getriebes integriert, bei der das Sicherungselement des Antriebsrades vorteilhafterweise unmittelbar am Gegensicherungselement der Führungskontur zumindest in einem bestimmten Drehwinkelbereich des Antriebsrades anliegt. Hierbei wirkt das Sicherungselement als eine Art Barriere für das Gegensicherungselement, das in seiner aktuellen Position am Sicherungselement gehalten ist. Obwohl sich das Antriebsrad einschließlich des Sicherungselementes um die Drehachse während des Freilaufes bewegt, liegt das Gegensicherungselement am Sicherungselement an, wodurch die Führungskontur des Sperrgliedes unbeweglich in ihrer Stellung verbleibt. Auch wenn sich das Sperrglied in der ersten Stellung oder in der zweiten Stellung befindet und das Antriebsrad stillsteht, sorgt die genannte Sicherheitseinrichtung in einem definierten Drehwinkelbereich des Antriebsrades dafür, dass die Führungskontur nicht ungewollt linear bewegt wird.

In einer bevorzugten Ausführungsform der Erfindung ist das Sicherungselement bogenförmig ausgeführt, das beabstandet um die Drehachse angeordnet ist. Hierbei kann das Sicherungselement halbkreisförmig ausgebildet sein. Vorteilhafterweise ist das Antriebsrad aus einem kreisförmigen Basiselement gebildet, das das Sicherungselement trägt. Mittig des Basiselementes kann eine Freifläche vorgesehen sein, die zumindest teilweise durch das bogenförmige Sicherungselement begrenzt ist. Vorzugsweise ist auf dem Sicherungselement der Steuernocken angeordnet. Das bedeutet, dass ausgehend vom Sicherungselement sich der Steuernocken in Richtung der Führungskontur erstreckt. Während sich das Sperrglied in der ersten Stellung befindet, erstreckt sich das Gegensicherungselement in Richtung der Freifläche des Basiselementes. Da das Gegensicherungselement am Sicherungselement anliegt, kann das Sperrglied mit der Führungskontur aus der ersten Stellung ungewollt in die zweite Stellung sich nicht bewegen.

Bevorzugt ist die Führungskontur durch mehrere Ausnehmungen gebildet, in die der Steuernocken bewegbar ist. Hierbei kann die Führungskontur eine erste Ausnehmung aufweisen, in der sich der Steuernocken während des Arbeitslaufes befindet. Darüber hinaus kann die Führungskontur eine zur ersten Ausnehmung beabstandete zweite Ausnehmung aufweisen, in der sich der Steuernocken während des Freilaufes befindet. Neben dem geringen Bauraum können hohe Zugkräfte am Sperrglied durch das erfindungsgemäße Getriebe erzielt werden. Vorteilhafterweise ist das Getriebe derart ausgeführt, dass während der Bewegung des Sperrgliedes von der ersten Stellung in die zweite Stellung das Sicherungselement die Führungskontur unterläuft.

Bei der erfindungsgemäßen Vorrichtung kann das Getriebe derart ausgeführt sein, dass während des ersten Freilaufes das Antriebsrad sich um einen Winkel α um die Achse dreht, der im Bereich von 0°≤ α ≤ 270° liegt. Ferner kann während des Arbeitslaufes das Antriebsrad sich um einen Winkel β um die Achse drehen, der im Bereich von 0°≤ β ≤ 270° liegt. Des Weiteren kann das Antriebsrad während des zweiten Freilaufes sich um einen Winkel γ um die Achse drehen, der im Bereich von 0°≤ γ 270° liegt. Somit können große Freiläufe erzielt werden, wobei gleichzeitig ein geringer Bauraum für die erfindungsgemäße Vorrichtung lediglich notwendig ist. In einer bevorzugten Ausführungsform der Erfindung betragen die oben angegebenen Winkel α, β und γ jeweils ungefähr 180°, so dass das Antriebsrad vom Anfang des ersten Freilaufs bis zum Ende des zweiten Freilaufes um einen Winkel von 3 x 180° = 540° gedreht wird. Grundsätzlich sind jedoch andere Winkelkombinationen denkbar.

Unter dem Gesichtspunkt einer kostengünstigen Herstellung sind das Antriebsrad und/oder das Sperrglied mit der Führungskontur in Spritzgusstechnik hergestellt. Ihre Materialdicke ist dabei so bemessen, dass ein Abbrechen, insbesondere ein Abscheren weitgehend ausgeschlossen werden kann. Vorteilhafterweise ist das freie Ende des Sperrgliedes, abgerundet ausgeführt, wodurch ein Einrasten des Sperrgliedes in eine Nut des funktionswesentlichen Bauteils erleichtert wird. Das Sperrglied und die Führungskontur können materialeinheitlich ausgebildet sein und ein einziges Bauteil sein. Vorteilhafterweise stellt das Antriebsrad mit dem Sicherungselement und dem Steuernocken ein Bauteil des Getriebes dar.

Die erfindungsgemäße Vorrichtung kann als elektrische Lenkungsverriegelung für Fahrzeuge zum Einsatz kommen, wobei die Vorrichtung zudem problemlos mit insbesondere sogenannten "Keyless-Entry"-Systemen kombinierbar ist. Die Vorrichtung kann von außen, beispielsweise per Funksignal oder nach einem stattgefundenen Datenaustausch, aktiviert werden. Dabei ermöglicht die Erfindung selbstverständlich eine Rückmeldung dahingehend, ob die betreffende Vorrichtung zuverlässig das funktionswesentliche Bauteil, insbesondere die Lenksäule oder dem Gangschalthebel des Kraftfahrzeuges, blockiert oder nicht. Dieses kann zum Beispiel durch eine optische oder akustische Meldevorrichtung dargestellt werden.

Vorteilhafterweise wird die Vorrichtung zur Ansteuerung des Sperrgliedes durch eine Steuerelektronik überwacht. Aus sicherheitstechnischen Gründen ist es vorteilhaft, wenn neben der Erfassung des Drehweges des Antriebsrades auch bestimmte Stellungen des Sperrgliedes sowie der Führungskontur erfasst werden. Dieses kann beispielsweise durch Sensoren, insbesondere Magnetfeldsensoren, erfolgen, die das magnetische Feld eines auf dem Antriebsrad oder dem Sperrglied angebrachten Permanentmagneten erfassen. Dadurch kann eine elektronische Steuerung der Funktionsfähigkeit der mechanischen Kopplung zwischen dem Antriebsrad und des Sperrgliedes überwacht sowie eine Manipulation erkennen.

Damit es in einem Verriegelungsvorgang, bei dem das Sperrglied aus der Entriegelungsstellung in die Verriegelungsstellung geführt wird, nicht zu etwaigen Beschädigungen des Sperrgliedes oder des funktionswesentlichen Bauteils kommt, ist das Sperrglied federbelastet ausgeführt. Hierbei kann das freie Ende des Sperrgliedes gefedert sein, damit das Sperrglied nicht schlagartig während des Verriegelungsvorganges im funktionswesentlichen Bauteil in seiner Bewegung gestoppt wird. Am Sperrglied kann ein Zusatzglied angeordnet sein, das über ein Federelement mit dem Sperrglied in Wirkverbindung steht. Falls während des Verriegelungsvorganges das Sperrglied mit seinem freien Ende aufgrund einer etwaigen Fehlstellung des funktionswesentlichen Bauteils nicht exakt in dessen Nut eingreifen kann, kann durch das Federelement, das zwischen dem Sperrglied und dem Zusatzglied sich befindet, eine etwaige Funktionsstörung der erfindungsgemäßen Vorrichtung verhindert werden. Eine lediglich geringe Bewegung des funktionswesentlichen Bauteils bewirkt, dass das Sperrglied durch das Federelement in die Nut gedrückt wird und somit in das funktionswesentliche Bauteil einrastet und die Verriegelungsstellung einnimmt. Darüber hinaus ist ein Federspeicher als Energiespeicher denkbar, der am Sperrglied angeordnet ist, wodurch das Sperrglied aus seiner Verriegelungsstellung über den Federspeicher herausgezogen wird.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: die erfindungsgemäße Vorrichtung zur Ansteuerung eines Sperrgliedes mit einem Antriebsrad und einer Führungskontur, wobei das Sperrglied sich in einer ersten Stellung befindet,
- Fig. 2: die Vorrichtung gemäß Fig. 1, wobei das Antriebsrad sich in einer weiteren, von Fig. 1 abweichenden Drehlage befindet,
- Fig. 3: die Vorrichtung gemäß Fig. 1, wobei das Sperrglied sich in der zweiten Stellung befindet,
- Fig. 4: die Vorrichtung gemäß Fig. 3, wobei sich das Antriebsrad in einer weiteren Drehlage befindet,
- Fig. 5: die erfindungsgemäße Vorrichtung gemäß Fig. 1, wobei das Sperrglied mit der Führungskontur ausgeblendet ist,
- Fig. 6: eine weitere Ausführungsform der erfindungsgemäßen Vorrichtung,
- Fig. 7: eine mögliche Schnittansicht der Vorrichtung aus Fig. 6, nachdem das Antriebsrad sich um weitere 90° gedreht hat,
- Fig. 8: eine Schnittansicht gemäß Schnittlinie VIII - VIII aus Fig. 6,
- Fig. 9: eine rein schematische Ansicht des Drehwinkels des Antriebsrades für den ersten und zweiten Freilauf sowie für den Arbeitslauf und
- Fig. 10: eine weitere Ansicht des Drehwinkels des Antriebsrades für den ersten und zweiten Freilauf sowie für den Arbeitslauf.

Obgleich die erfindungsgemäße Vorrichtung 10 anhand der Figuren als Lenkradverriegelung in einem Kraftfahrzeug im Folgenden erläutert wird, ist der Einsatz der Erfindung nicht allein auf diese Anwendung beschränkt. Vielmehr kann diese Verriegelungsvorrichtung 10 überall dort zum Einsatz kommen, wo drehbare Achsen oder Wellen schaltbar blockiert sollen, beispielsweise zur Sicherung von drehbaren elektromechanischen Schaltwerken.

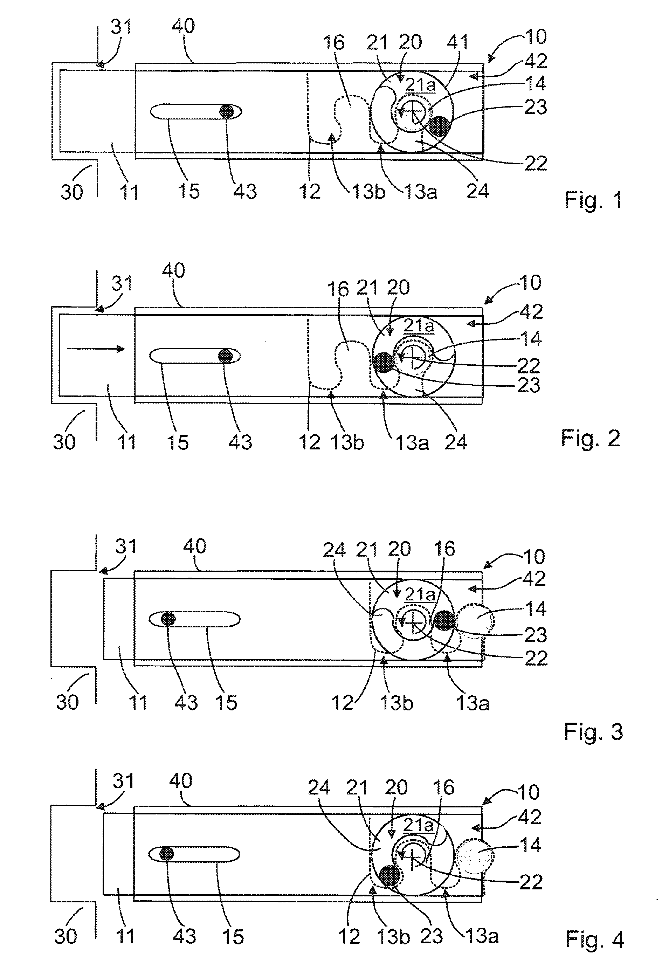

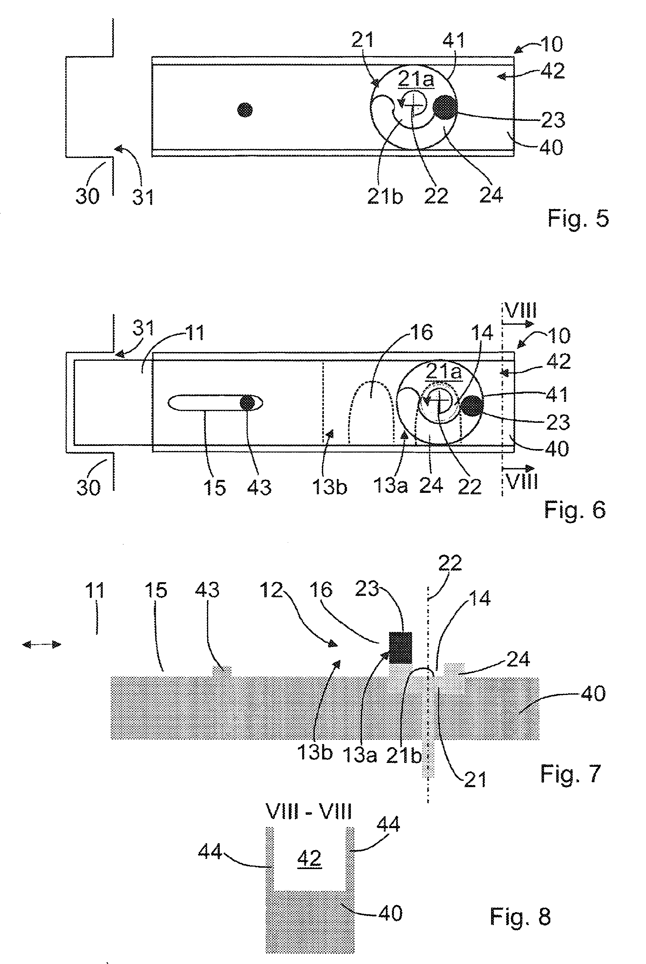

Gemäß Fig. 1 ist eine stark vereinfachte Darstellung der genannten Vorrichtung 10 zur Ansteuerung eines Sperrgliedes 11 der Lenksäule 30 eines Kraftfahrzeuges gezeigt, die ein Getriebe 20 aufweist, das ein Antriebsrad 21 mit einer ersten, ortsfesten Drehachse 22 aufweist. Das Antriebsrad 21 ist hierbei mit dem Sperrglied 11 in mechanischer Wirkverbindung. Das Getriebe 20 ist innerhalb eines Gehäuses 40 angeordnet, das eine dem Antriebsrad 21 angepasste Öffnung 41 aufweist, in der das Antriebsrad 21 um die Achse 22 drehbar gelagert ist. Das Gehäuse 40 weist des Weiteren eine Führung 42 auf, in der das Sperrglied 11 linear bewegbar gelagert ist, welches in Fig. 8 angedeutet ist. Die Führung 42 weist zwei Schenkel 44 auf, innerhalb dieser das Sperrglied 11 linear geführt ist. Wie auch Fig. 5 verdeutlicht, ist das Antriebsrad 21 aus einem kreisförmigen Basiselement 21a gebildet, das ein Sicherungselement 24 trägt. Das Sicherungselement 24 ist im folgenden Ausführungsbeispiel halbkreisförmig ausgebildet. An einem Ende des Sicherungselementes 24 befindet sich ein Steuernocken 23, der ausgehend vom Sicherungselement 24 vorsprungartig sich erstreckt. Mittig des Basiselementes 21a ist eine Freifläche 21b vorgesehen, die zumindest teilweise durch das Sicherungselement 24 begrenzt ist.

Der Steuernocken 23 wirkt mit einer am Sperrglied 11 angeordneten Führungskontur 12, die durch mehrere Ausnehmungen 13a, 13b gebildet ist. Hierbei weist die Führungskontur 12 eine erste Ausnehmung 13a auf, in der sich der Steuernocken 23 gemäß Fig. 2 und Fig. 3 befindet, worauf im Folgenden noch eingegangen wird. Die Führungskontur 12 ist des Weiteren mit einer zweiten Ausnehmung 13b ausgebildet, die benachbart zur ersten Ausnehmung 13a angeordnet ist. In dieser zweiten Ausnehmung 13b befindet sich der Steuernocken 23 gemäß Fig. 4. Zwischen der ersten 13a und der zweiten Ausnehmung 13b befindet sich eine Zwischenwandung 16.

In Fig. 1 befindet sich das Sperrglied 11 in einer ersten Stellung, insbesondere in der Verriegelungsstellung, bei der es mit seinem freien Ende in die Nut 31 einer Lenksäule 30 sich erstreckt. Um das Sperrglied 11 nun aus der ersten Stellung in eine zweite Stellung, hier in eine Entriegelungsstellung zu bringen, bei der das Sperrglied 11 von der Lenksäule 30 entkoppelt ist, wodurch eine Bewegung der Lenksäule 30 freigegeben ist, erfolgt eine Bewegung des Antriebsrades 21 durch einen nicht dargestellten Motor gegen den Uhrzeigersinn, welches durch den dargestellten Pfeil in Fig. 1 dargestellt ist. Während das Antriebsrad 21 um die Achse 22 gedreht wird, bewegt sich der Steuernocken 23 um den rechten Bereich der Führungskontur 12, insbesondere um das Gegensicherungselement 14 bis der Steuernocken 23 in die erste Ausnehmung 13a gemäß Fig. 2 gelangt. Während sich das Antriebsrad 21 in die Position gemäß Fig. 2 bewegt, steht die Führungskontur 12 still und das Sperrglied 11 verbleibt in seiner ersten Stellung. Nachdem das Antriebsrad 21 sich um circa 220° gegen den Uhrzeigersinn gedreht hat, übt der Steuernocken 23 eine Kraft auf die Führungskontur 12 aus, während das Antriebsrad 21 sich weiter gegen den Uhrzeigersinn dreht (siehe Fig. 2). Hierbei drückt der Steuernocken 23 die Führungskontur 12 linear entlang der Führung 42 des Gehäuses 40 nach rechts, wodurch das Sperrglied 11 aus der ersten Stellung in seine zweite Stellung gemäß Fig. 3 bewegt wird. Das Sperrglied 11 ist ferner mit einer Nut 15 ausgeführt, in der ein Stift 43 linear beweglich geführt ist, der mit dem Gehäuse 40 fest verbunden ist. Während das Sperrglied 11 sich von seiner ersten Stellung in seine zweite Stellung und umgekehrt bewegt, verschiebt sich die Nut 15 entlang des Stiftes 43. Die Nut 15 sowie der Stift 43 dienen im vorliegenden Ausführungsbeispiel als zusätzliche Anschlagmittel. Selbstverständlich kann der Stift 43 am Sperrglied 11 und die Nut 15 am Gehäuse 40 in einer weiteren nicht dargestellten Alternative angeordnet sein.

Ausgehend von Fig. 3 führt eine weitere Drehung des Antriebsrades 21 gegen den Uhrzeigersinn lediglich zu einer Bewegung des Steuernockens 23 in die zweite Ausnehmung 13b der Führungskontur 12, wobei eine Verschiebung der Führungskontur 12 entlang der Führung 42 nicht erfolgt.

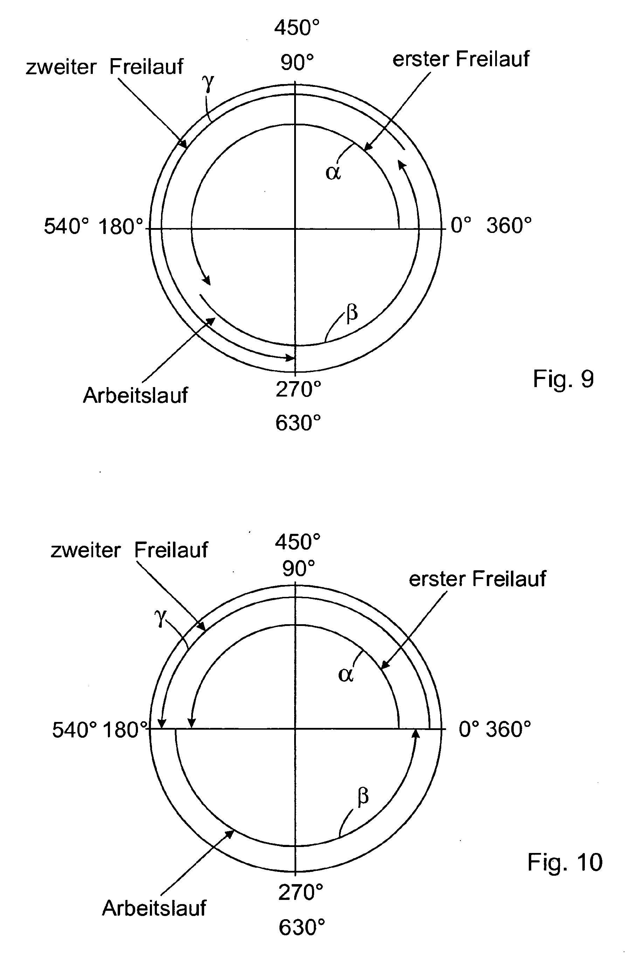

Das Getriebe 20 führt im vorliegenden Ausführungsbeispiel somit zwei Freiläufe aus, bei denen das Sperrglied 11 während der Drehung des Antriebsrades 21 unverändert in seiner Position verbleibt, welches ebenfalls in Fig. 9 verdeutlicht ist. Der erste Freilauf wird während der Drehung des Antriebsrades 21 ausgehend von Fig. 1 bis Fig. 2 durchgeführt. Hierbei wird das Antriebsrad 21 um einen Winkel α von circa α = 220° in die erste Ausnehmung 13a der Führungskontur 12 verschwenkt. Anschließend erfolgt ein Arbeitslauf, bei dem während der Drehung des Antriebsrades 21 das Sperrglied 11 linear nach rechts bewegt wird. Ausgehend von Fig. 2 startet der Arbeitslauf, bis das Antriebsrad 21 sich um einen Winkel β um circa β = 180° um die Achse 22 weiter gedreht hat und die Position in Fig. 3 erreicht. Der Steuernocken 23 befindet sich immer noch in der ersten Ausnehmung 13a der Führungskontur 12, wobei sich die Führungskontur 12 mit dem Sperrglied 11 aus der ersten Stellung in die zweite Stellung bewegt hat. Im Anschluss folgt der zweite Freilauf, bei dem sich der Steuernocken 23 aus der ersten Ausnehmung 13a gegen den Uhrzeigersinn bewegt und in die zweite Ausnehmung 13b gemäß Fig. 4 gelangt. Während des zweiten Freilaufes dreht sich das Antriebsrad 21 um einen Winkel γ von circa γ = 220°.

Um das Sperrglied 11 aus der zweiten Stellung zurück in die erste Stellung zu bringen, wird das Antriebsrad 21 in entgegengesetzter Richtung, also im Uhrzeigersinn gedreht, wobei der Steuernocken 23 zurück in die erste Ausnehmung 13a zunächst sich bewegt. Um in diese Position zu gelangen, führt das Getriebe 20 wiederum einen Freilauf aus. Anschließend erfolgt der Arbeitslauf, bei dem der Steuernocken 23 innerhalb der ersten Ausnehmung 13a die Führungskontur 12 linear nach links zurück verschiebt, wodurch das Sperrglied 11 von seiner zweiten Stellung in die erste Stellung gebracht wird. Daraufhin folgt ein weiterer Freilauf, bis das Antriebsrad 21 seine Ursprungslage gemäß Fig. 1 erreicht hat.

Das Sicherungselement 24 des Antriebsrades 21 sowie das Gegensicherungselement 14 der Führungskontur 12 sind derart zueinander angeordnet, dass während des Freilaufes des Getriebes 20 eine Bewegung des Sperrgliedes 11 verhindert wird. Ausgehend vom ersten Freilauf, bei dem das Antriebsrad 21 gemäß Fig. 1 gegen den Uhrzeigersinn um die Achse 22 gedreht wird und die Position in Fig. 2 erreicht, liegt das Gegensicherungselement 14 der Führungskontur 12 unmittelbar am Sicherungselement 24 an, wodurch eine ungewollte Bewegung des Sperrgliedes 11 aus seiner Verriegelungsstellung in die Entriegelungsstellung verhindert wird. Fig. 7 zeigt deutlich, wie das Sicherungselement 24 als Barriere für das Gegensicherungselement 14 dient. Auch in Ruheposition des Antriebsrades 21 wird die Verriegelungsstellung des Sperrgliedes 11 durch das Sicherungselement 24 in einem definierten Drehwinkelbereich des Antriebsrades 21 gewährleistet, an dem das Gegensicherungselement 14 am Sicherungselement 24 anliegt. Auch während des zweiten Freilaufes, bei dem das Antriebsrad 21 ausgehend von seiner Position in Fig. 3 in seine Position gemäß Fig. 4 sich bewegt, liegt das Sicherungselement 24 unmittelbar am Gegensicherungselement 14 an, wodurch eine ungewollte Bewegung der Führungskontur 12 sowie des Sperrgliedes 11 in seine erste Stellung verhindert wird.

Gemäß Fig. 6 sowie Fig. 10 ist eine weitere Alternative einer möglichen Führungskontur 12 dargestellt. Durch die geometrische Variation der Führungskontur 12 sowie der Ausnehmungen 13a, 13b kann die Länge des ersten und des zweiten Freilaufes sowie des Arbeitslaufes variiert werden. Hierbei weist das Getriebe 20 einen ersten und einen zweiten Freilauf auf, bei denen jeweils das Antriebsrad 21 um den Winkel α sowie γ gedreht wird, der circa α = 180° bzw. γ = 180° beträgt. Während des Arbeitslaufes wird das Antriebsrad 21 um einen Winkel β gedreht, der ebenfalls circa β = 180° beträgt. Somit wird das Antriebsrad 21 ausgehend vom ersten Freilauf bis zum Ende des zweiten Freilaufes um circa 540° gedreht.

Das erfindungsgemäße Getriebe 20 ist gemäß der dargestellten Ausführungsbeispiele derart ausgeführt, dass während der Bewegung des Sperrgliedes 11 von seiner ersten Stellung in seine zweite Stellung und umgekehrt das Sicherungselement 24 die Führungskontur 12 im Wesentlichen unterläuft. Dieses wird auch in Fig. 7 deutlich. Der Steuernocken 23 befindet sich hierbei in der ersten Ausnehmung 13a der Führungskontur 12. Das Gegensicherungselement 14 ist zwischen dem Steuernocken 23 und dem Sicherungselement 24 positioniert, wobei das Gegensicherungselement 14 bis zur Freifläche 21 b des Antriebsrades 21 sich erstreckt und unmittelbar am Sicherungselement 24 anliegt. Über eine Zwischenwandung 16 der Führungskontur 12 ist die erste Ausnehmung 13a von der zweiten Ausnehmung 13b getrennt. Das Gegensicherungselement 14 stellt ebenfalls eine Zwischenwandung zwischen der ersten Ausnehmung 13a und dem Sicherungselement 24 gemäß Fig. 6 dar. Während das Sperrglied 11 von seiner ersten Position in seine zweite Position und umgekehrt bewegt wird, unterläuft das Sicherungselement 24 die Führungskontur 12, wobei gleichzeitig der Steuernocken 23 an definierten Winkelbereichen des Antriebsrades 21 um die Zwischenwandung 16 sowie das Gegensicherungselement 14 entlang fährt und von seiner Ausgangsposition gemäß Fig. 1 in die erste Ausnehmung 13a sowie in die zweite Ausnehmung 13b fährt. Obwohl sich Fig. 7 auf Fig. 6 bezieht, ist die beschriebene Kinematik auf das Ausführungsbeispiel gemäß der Fig. 1 direkt übertragbar.

### Bezugszeichenliste

- 10: Vorrichtung
- 11: Sperrglied
- 12: Führungskontur
- 13a: erste Ausnehmung der Führungskontur
- 13b: zweite Ausnehmung der Führungskontur
- 14: Gegensicherungselement
- 15: Nut
- 16: Zwischenwandung
- 20: Getriebe
- 21: Antriebsrad
- 21a: Basiselement des Antriebsrades
- 21b: Freifläche des Antriebsrades
- 22: Drehachse
- 23: Steuernocken
- 24: Sicherungselement
- 30: funktionswesentliches Bauteil, Lenksäule
- 31: Nut
- 40: Gehäuse
- 41: Öffnung
- 42: Führung
- 43: Stift
- 44: Schenkel

## Patentansprüche

1. Vorrichtung (10), mit der ein Sperrglied (1.1) für ein funktionswesentliches Bauteils (30), das als eine Lenksäule (30) oder ein Gangschalthebel eines Kraftfahrzeuges ausgebildet ist, angesteuert wird, mit dem sperrglied (11), einem Getriebe (20), das ein Antriebsrad (21) mit einer ersten, ortsfesten Drehachse (22) aufweist und mit dem Sperrglied (11) in mechanischer Wirkverbindung steht, wodurch bei Drehung des Antriebsrades (21) das Sperrglied (11) in eine erste Stellung und in eine zweite Stellung bringbar ist, und
das Getriebe (20) während der Drehung des Antriebsrades (21) einen Freilauf und einen Arbeitslauf aufweist, wobei beim Freilauf das Sperrglied (11) unverändert In seiner Position verbleibt und beim Arbeitslauf das Sperrglied (11) linear bewegt wird,
**dadurch gekennzeichnet,**
**dass** das Antriebsrad (21) einen Steuernocken (23) aufweist, der mit einer am Sperrglied (91) angeordneten Führungskontur (12) zusammenwirkt und entlang der Führungskontur (12) bewegbar ist, und
ein Sicherungselement (24) am Antriebsrad (21) und ein Gegensicherungselement (14) an der Führungskontur (12) derart zueinander angeordnet sind, dass während des Freilaufes eine Bewegung des Sperrglieds (11) verhindert wird.

2. Vorrichtung (1) nach Anspruch 1,
**dadurch gekennzeichnet,**
**dass** das Sicherungselement (24) bogenförmig ausgeführt ist, das beabstandet um die Drehachse (22) angeordnet ist.

3. Vorrichtung (1) nach Anspruch 1 oder 2,
**dadurch gekennzeichnet,**
**dass** das Sicherungselement (24) halbkreisförmig ausgebildet ist.

4. Vorrichtung (1) nach einem der vorhergehenden Ansprüche,
**dadurch gekennzeichnet,**
**dass** die Führungskontur (12) durch mehrere Ausnehmungen (13a,13b) gebildet ist, in die der Steuernocken (23) bewegbar ist.

5. Vorrichtung (1) nach einem der vorhergehenden Ansprüche,
**dadurch gekennzeichnet,**
**dass** der Steuernocken (23) ausgehend vom Sicherungselement (24) sich in Richtung der Führungskontur (12) erstreckt.

6. Vorrichtung (1) nach einem der vorhergehenden Ansprüche,
**dadurch gekennzeichnet,**
**dass** das Antriebsrad (21) aus einem kreisförmigen Basiselement (21 a) gebildet ist, das das Sicherungselement (24) trägt, wobei mittig des Basiselementes (21a) eine Freifläche (21b) vorgesehen ist, die zumindest teilweise durch das Sicherungselement (24) begrenzt ist.

7. Vorrichtung (1) nach Anspruch 6,
**dadurch gekennzeichnet,**
**dass** während sich das Sperrglied (11) in der ersten Stellung befindet, das Gegensicherungselement (14) sich in Richtung der Freifläche (21b) erstreckt.

8. Vorrichtung (1) nach einem der vorhergehenden Ansprüche,
**dadurch gekennzeichnet,**
**dass** das Getriebe (20) Innerhalb eines Gehäuses (40) angeordnet ist, das eine dem Antriebsrad (21) angepasste Öffnung (41) aufweiset, In der das Antriebsrad (21) um die Achse (22) drehbar gelagert ist, wobei insbesondere das Gehäuse (40) eine Führung (42) aufweist, in der das Sperrglied (11) mit der Führungskontur (12) linear bewegbar geführt ist.

9. Vorrichtung (1) nach einem der vorhergehenden Ansprüche,
**dadurch gekennzeichnet,**
**dass** während der Bewegung des Sperrgliedes (11) von der ersten Stellung in die zweite Stellung der Freilauf durch einen ersten Freilauf und einen zweiten Freilauf gebildet ist, wobei der erste Freilauf in der ersten Stellung des Sperrgliedes (11) und der zweite Freilauf in der zweiten Stellung des Sperrgliedes (11) erfolgt, wobei insbesondere während des ersten Freilaufes das Antriebsrad (21) sich um einen Winkel α um die Achse (22)-dreht, der Im Bereich von 0°≤ α ≤ 270° liegt.

10. Vorrichtung (1) nach einem der vorhergehenden Ansprüche,
**dadurch gekennzeichnet,**
**dass** während des Arbeitslaufes das Antriebsrad (21) sich um einen Winkel β um die Achse (22) dreht, der im Bereich von 0°≤ β ≤ 270° liegt.

11. Vorrichtung (1) nach einem der vorhergehenden Ansprüche 9 oder 10, **dadurch gekennzeichnet,**
**dass** während des zweiten Freilaufes das Antriebsrad (21) sich um einen Winkel γ um die Achse (22) dreht, der im Bereich von 0°≤ γ ≤ 270° liegt.

12. Vorrichtung (1) nach einem der vorhergehenden Ansprüche,
**dadurch gekennzeichnet,**
**dass** die Führungskontur (12) eine erste Ausnehmung (13a) aufweist, in der sich der Steuernocken (23) während des Arbeitslaufes befindet.

13. Vorrichtung (1) nach einem der vorhergehenden Ansprüche,
**dadurch gekennzeichnet,**
**dass** die Führungskontur (12) eine zweite Ausnehmung (13b) aufweist, In der sich der Steuernocken (23) während des Freilaufes befindet.

14. Vorrichtung (1) nach einem der vorhergehenden Ansprüche,
**dadurch gekennzeichnet,**
**dass** das Getriebe (20) derart ausgeführt ist, dass während der Bewegung des Sperrgliedes (11) von der ersten Stellung in die zweite Stellung das Sicherungselement (24) die Führungskontur (12) unterläuft.

15. Vorrichtung (1) nach einem der vorhergehenden Ansprüche,
**dadurch gekennzeichnet,**
**dass** das Antriebsrad (21) mit einem Motor verbunden ist, der in eine erste Drehrichtung dreht während sich das Sperrglied (11) von der ersten Stellung in die zweite Stellung bewegt, wobei der Motor in eine der ersten Drehrichtung entgegen gesetzte zweite Drehrichtung dreht während sich das Sperrglied (11) von der zweite Stellung in die ersten Stellung bewegt.

16. Vorrichtung (1) nach einem der vorhergehenden Ansprüche,
**dadurch gekennzeichnet,**
**dass** in der ersten Stellung das Sperrglied (11) sich in einer Verriegelungsposition befindet und im Eingriff mit dem funktionswesentlichen Bauteil (30) ist, wobei in der zweiten Stellung das Sperrglied (11) sich in einer Entriegelungsposition befindet und entkoppelt zum funktionswesentlichen Bauteil (30) ist.

## Claims

1. A device (10), with which a locking element (11) for a functionally significant component (30), which is configured as a steering column (30) or a gear shift lever of a motor vehicle, is controlled, having the locking element (11), a mechanism (20) that has a drive gear (21) with a first stationary rotational axis (22) and is in mechanical operative connection with the locking element (11), as a result of which the locking element (11) can be brought into a first position and into a second position upon rotation of the drive gear (21), and
the mechanism (20), during the rotation of the drive gear (21), has an idle cycle and a work cycle, wherein, in the case of the idle cycle, the locking element (11) remains unchanged in its position and, in the case of the work cycle, the locking element (11) is moved linearly,
**characterised in that**
the drive gear (21) has a control cam (23), which cooperates with a guide contour (12) arranged at the locking element (11) and is movable along the guide contour (12), and
a securing member (24) at the drive gear (21) and a counter-securing member (14) at the guide contour (12) are arranged relative to one another such that, during the idle cycle, movement of the locking element (11) is prevented.

2. The device (10) according to Claim 1,
**characterised in that**
the securing member (24) is configured in a curved shape and is arranged spaced apart around the rotational axis (22).

3. The device (10) according to claim 1 or 2,
**characterised in that**
the securing member (24) is configured semi-circularly.

4. The device (10) according to one of the preceding claims,
**characterised in that**
the guide contour (12) is formed by several recesses (13a,13b), into which the control cam (23) can be moved.

5. The device (10) according to one of the preceding claims,
**characterised in that**
the control cam (23) extends from the securing member (24) towards the guide contour (12).

6. The device (10) according to one of the preceding claims,
**characterised in that**
the drive gear (21) is formed from a circular base member (21 a), which bears the securing member (24), wherein there is provided in the middle of the base member (21 a) a free space (21 b), which is at least partly defined by the securing member (24).

7. The device (10) according to Claim 6,
**characterised in that**
whilst the locking element (11) is in the first position, the counter-securing member (14) extends towards the free space (21 b).

8. The device (10) according to one of the preceding claims,
**characterised in that**
the mechanism (20) is arranged inside a casing (40) which has an aperture (41), which matches the drive gear (21) and in which the drive gear (21) is rotatably borne around the axis (22), wherein in particular the casing (40) has a guide (42) in which the locking element (11) with the guide contour (12) is guided in a linearly movable manner.

9. The device (10) according to one of the preceding claims,
**characterised in that**
during the movement of the locking element (11) from the first position into the second position, the idle cycle is formed by a first idle cycle and a second idle cycle, wherein the first idle cycle takes place when the locking element (11) is in the first position and the second idle cycle takes place when the locking element (11) is in the second position, wherein, in particular during the first idle cycle, the drive gear (21) rotates around the axis (22) by an angle α in the range of 0°≤ α ≤ 270°.

10. The device (10) according to one of the preceding claims,
**characterised in that**
during the work cycle, the drive gear (21) rotates around the axis (22) by an angle β in the range of 0°≤ β ≤ 270°.

11. The device (10) according to one of the preceding claims 9 or 10,
**characterised in that**
during the second idle cycle, the drive gear (21) rotates around the axis (22) by an angle γ in the range of 0°≤ γ≤ 270°.

12. The device (10) according to one of the preceding claims,
**characterised in that**
the guide contour (12) has a first recess (13a), in which the control cam (23) is located during the work cycle.

13. The device (10) according to one of the preceding claims,
**characterised in that**
the guide contour (12) has a second recess (13b), in which the control cam (23) is located during the idle cycle.

14. The device (10) according to one of the preceding claims,
**characterised in that**
the mechanism (20) is configured such that, during the movement of the locking element (11) from the first position into the second position, the securing member (24) slips by the guide contour (12).

15. The device (10) according to one of the preceding claims,
**characterised in that**
the drive gear (21) is connected to a motor, which rotates in a first direction of rotation while the the locking element (11) moves from the first position into the second position, wherein the motor rotates in a second direction of rotation, opposite the first direction of rotation, while the locking element (11) moves from the second position into the first position.

16. The device (10) according to one of the preceding claims,
**characterised in that**
in the first position the locking element (11) is in a blocking position and in engagement with the functionally significant component (30), wherein in the second position the locking element (11) is in an unblocking position and is decoupled relative to the functionally significant component (30).

## Revendications

1. Dispositif (10), avec lequel est asservi un organe de blocage (11) pour un élément fonctionnellement essentiel (30) qui se présente sous la forme d'une colonne de direction (30) ou d'un levier de changement de vitesses d'un véhicule automobile, comprenant l'organe de blocage (11), et comprenant un mécanisme de transmission (20) qui présente une roue menante (21) ayant un premier axe de rotation stationnaire (22) et qui est en liaison fonctionnelle mécanique avec l'organe de blocage (11), de sorte que, lors de la rotation de la roue menante (21), l'organe de blocage (11) peut être amené dans une première position et dans une deuxième position, et
le mécanisme de transmission (20) présentant, pendant la rotation de la roue menante (21), une course libre et une course de travail, sachant que l'organe de blocage (11) reste de manière inchangée dans sa position lors de la course libre et que l'organe de blocage (11) est déplacé linéairement lors de la course de travail,
**caractérisé en ce que** la roue menante (21) présente une came de commande (23) qui coopère avec un contour de guidage (12) disposé sur l'organe de blocage (11) et qui peut être déplacée le long du contour de guidage (12), et
un élément de sécurité (24), sur la roue menante (21), et un élément de sécurité complémentaire (14), sur le contour de guidage (12), sont disposés l'un par rapport à l'autre de telle sorte qu'un déplacement de l'organe de blocage (11) est empêché pendant la course libre.

2. Dispositif (10) selon la revendication 1, **caractérisé en ce que** l'élément de sécurité (24) est réalisé arqué, cet l'élément de sécurité (24) étant disposé à distance autour de l'axe de rotation (22).

3. Dispositif (10) selon la revendication 1 ou 2, **caractérisé en ce que** l'élément de sécurité (24) est réalisé semi-circulaire.

4. Dispositif (10) selon l'une des revendications précédentes, **caractérisé en ce que** le contour de guidage (12) est formé par plusieurs évidements (13a, 13b), dans lesquels la came de commande (23) peut être déplacée.

5. Dispositif (10) selon l'une des revendications précédentes, **caractérisé en ce que** la came de commande (23) s'étend en direction du contour de guidage (12) en partant de l'élément de sécurité (24).

6. Dispositif (10) selon l'une des revendications précédentes, **caractérisé en ce que** la roue menante (21) est constituée d'un élément de base circulaire (21a) qui porte l'élément de sécurité (24), sachant qu'il est prévu au centre de l'élément de base (21a) une surface libre (21 b) qui est délimitée au moins partiellement par l'élément de sécurité (24).

7. Dispositif (10) selon la revendication 6, **caractérisé en ce que** l'élément de sécurité complémentaire (14) s'étend en direction de la surface libre (21b) pendant que l'organe de blocage (11) se trouve dans la première position.

8. Dispositif (10) selon l'une des revendications précédentes, **caractérisé en ce que** le mécanisme de transmission (20) est disposé à l'intérieur d'un boîtier (40) qui présente une ouverture (41) adaptée à la roue menante (21), ouverture dans laquelle la roue menante (21) est montée à rotation autour de l'axe (22), sachant notamment que le boîtier (40) présente un guide (42) dans lequel l'organe de blocage (11) avec le contour de guidage (12) est guidé en déplacement linéaire.

9. Dispositif (10) selon l'une des revendications précédentes, **caractérisé en ce que**, pendant le déplacement de l'organe de blocage (11) de la première position dans la deuxième position, la course libre est formée par une première course libre et une deuxième course libre, sachant que la première course libre a lieu dans la première position de l'organe de blocage (11) et la deuxième course libre dans la deuxième position de l'organe de blocage (11), sachant notamment que, pendant la première course libre, la roue menante (21) tourne autour de l'axe (22) d'un angle α qui se situe dans la plage 0° ≤ α ≤ 270°.

10. Dispositif (10) selon l'une des revendications précédentes, **caractérisé en ce que**, pendant la course de travail, la roue menante (21) tourne autour de l'axe (22) d'un angle β qui se situe dans la plage 0° ≤ β ≤ 270°.

11. Dispositif (10) selon l'une des revendications précédentes 9 ou 10, **caractérisé en ce que**, pendant la deuxième course libre, la roue menante (21) tourne autour de l'axe (22) d'un angle γ qui se situe dans la plage 0° ≤ γ ≤ 270°.

12. Dispositif (10) selon l'une des revendications précédentes, **caractérisé en ce que** le contour de guidage (12) présente un premier évidement (13a) dans lequel la came de commande (23) se trouve pendant la course de travail.

13. Dispositif (10) selon l'une des revendications précédentes, **caractérisé en ce que** le contour de guidage (12) présente un deuxième évidement (13b) dans lequel la came de commande (23) se trouve pendant la course libre.

14. Dispositif (10) selon l'une des revendications précédentes, **caractérisé en ce que** le mécanisme de transmission (20) est réalisé de telle sorte que, pendant le déplacement de l'organe de blocage (11) de la première position dans la deuxième position, l'élément de sécurité (24) contourne le contour de guidage (12).

15. Dispositif (10) selon l'une des revendications précédentes, **caractérisé en ce que** la roue menante (21) est reliée à un moteur qui tourne dans un premier sens de rotation pendant que l'organe de blocage (11) se déplace de la première position dans la deuxième position, sachant que le moteur tourne dans un deuxième sens de rotation opposé au premier sens de rotation pendant que l'organe de blocage (11) se déplace de la deuxième position dans la première position.

16. Dispositif (10) selon l'une des revendications précédentes, **caractérisé en ce que**, dans la première position, l'organe de blocage (11) se trouve dans une position de verrouillage et est en engagement avec l'élément fonctionnellement essentiel (30), sachant que dans la deuxième position, l'organe de blocage (11) se trouve dans une position de déverrouillage et est désaccouplé par rapport à l'élément fonctionnellement essentiel (30).
